# EUROPEAN PATENT APPLICATION

(11) **EP 2 112 130 A1**
(43) Date of publication of application: **28.10.2009**
(21) Application number: 08007746.4
(22) Date of filing: 22.04.2008
(51) Int. Cl.: C04B 37/00, C04B 37/04

(54) **A method for making a glass supported system, such glass supported system, and the use of a glass support therefor**

(71) Applicant: UNIVERSITEIT TWENTE, NL-7500 AE Enschede-Drienerlo (NL); Stichting Voor De Technische Wetenschappen, 3527 JP Utrecht (NL)
(72) Inventor: Unnikrishnan, Sandeep, 7545 TD Enschede (NL); Jansen, Henricus Venantius, 7523 CZ Enschede (NL); Berenschot, Johan Willem, 7106 CK Winterswijk (NL); Fazal, Imran, 7522 ZA Enschede (NL); Louwerse, Marcus Cornelis, 7521 ZC Enschede (NL); Mogulkoc, Berker, 7522 NP Enschede (NL); Sanders, Remco, 7534 KG Enschede (NL); De Boer, Meint Jelle, 7513 ZD Enschede (NL); Elwenspoek, Michael Curt, 7621 VC Borne (NL)
(74) Representative: Prins, Hendrik Willem

(57) **Abstract**

The invention relates to a method for making a glass supported micro or nano system, comprising the steps of:
i) providing a glass support;
ii) mounting at least one system on at least one glass support; and
iii) bonding the system to the glass support, such that the system is circumferentially supported within the confinement of the glass support, to a glass supported system, and to the use of a glass support therefor.

## Description

The present invention relates to a method for making a glass supported micro or nano system, to a glass supported micro or nano system obtainable with such method, and to the use of a glass support therefore.

Micro systems object of the present invention are systems fabricated using micro system technology (MST). Micro systems are also called micro electromechanical systems (MEMS) and have dimensions generally range in size from several millimeters down to a micrometer. Using nano system technology (NST) nano systems are fabricated with dimensions at the nano-scale and are also called nano electromechanical systems (NEMS).

Micro/nano technology can be implemented in a number of different designs and using many different materials and manufacturing techniques. The choice of which will depend on the device being created and the market sector in which it has to operate. The various materials most commonly used in MEMS/NEMS include silicon, silicon based inorganic materials (like silicon oxide, silicon nitride, silicon carbide etc.), metals and polymers.

Presently, after making the system (micro and/or nano), it is handled for packaging, transport and handling. The packaging comprises mechanical clamping or gluing the system into a temporary casing along with macro connectors. Mechanical clamping includes fastening the system with or without seals to the casing, typically using a screwing system. In case of gluing the system is attached to the casing and provided with connectors using an intermediate gluing material for facilitating packaging.

A problem encountered using mechanical clamping is that the delicate systems can not withstand high clamping forces required for proper packaging e.g. leak tightness. Gluing provides a problem when the packaged system is to be operated at high pressure (> 100bars) and/or at high temperatures (>300°C). However, for special (e.g. micro fluids) applications leakage of the mentioned types of packages remains a problem. Finally, packaging is the last step in the fabrication process and is typically less flexible in terms of the fabrication process flow.

The present invention has for its object to avoid the above mentioned problems in relation to packaging, sealing and/or interfacing micro and nano systems. During fabrication the system is directly bonded to the support without using any intermediate or glue material. After this (direct or fusion) bonding the system is ready for transport or use. However, further processing of the system is still possible. The support forms the interface to the macro world, provides robustness and stability. Since the support is much bigger and heavier than the system and the system remains preferably within the confinement of the support, the support will take all the handling (or mis-handling) load or stress. Thereby protecting the delicate system during handling, transport and use.

The support is bonded to the system. This bonding procedure assures hermetic sealing if necessary even at high temperatures and pressures of operation. Standard connectors like from Swagelok^{®} can be used to easily interface the supported system to the desired equipment, with negligible load on the bond interface.

Thus, the support for the system has become a functional mechanical part and may even be a functional part for the envisaged application.

Accordingly, the present invention provides a method for making a glass supported system, comprising the steps of:
i) providing a glass support;
ii) mounting a system on at least one glass support; and
iii)fusion bonding the system to the glass support, such that the system is circumferentially supported within the confinement of the glass support.

The support structure for the systems is made of any glass (or ceramic material), which can be bonded to the surface of the system. The system is normally produced by lithographic techniques. They are traditionally based on silicon, silicon based material, such as silicon oxide, silicon nitride, and silicon carbide. For the bonding, also known as fusion bonding, the glass support is made of a suitable glass type. Suitable glass types are glass made of Pyrex^{®}, Duran^{®}, or ceramics such as alumina. Accordingly, by fusion bonding the glass support and the micro or nano electromechanical system (with their contacting surfaces) are mated and fused together. When the contacting surfaces are "atomically" or perfectly smooth (roughness_{RMS} < 0.25 nm, then they could instantaneously fuse to each other by forming strong bonds (see Gui, C. (1998, November 13), "Direct wafer bonding with chemical mechanical polishing" Ph.D. Dissertation, University of Twente, ISBN 90-6512328).
But in reality such smoothness is extremely hard to achieve, and an elevated temperature may be needed for bond formation by overcoming the roughness.

Generally, the heat treatment is carried out at a temperature in the range of 200°C to 1200C°, preferably 300°C to 900°C, more preferably 400°C to 800°C. The temperature is selected in order to obtain the required bond between the system and the glass support. At the same time it could be of relevance to complete the bonding procedure within a practical period of time. Generally, the heat treatment may be carried out during a heat treatment time period in the range of 1min to 100hours, preferably 5min to 50hours, more preferably 10min and 10hours.

As stated above, the applied temperature and/or the heat treatment time is primarily dependent on the surface roughness of the glass support and the system. The bonding procedure according to the invention may be preferably carried out with contact bonding surfaces of which the surface roughness is less than 5µm, preferably less than 100nm, more preferably less than 1nm. The smoother the contact surface the shorter the bonding time period and/or lower bonding temperature may be selected. The system is normally produced using lithographic technology. Such systems will have (at the bonding surfaces) generally a surface roughness of less than 10nm. It is preferred a surface roughness of less than 1nm, more preferably less than 0.25nm. The bonding surface of the glass support may be relatively rough as compared to the system. Practically, the surface roughness of the glass support is less than 5µm, preferably less than 100nm, more preferably less than 1nm.
Assuming a surface of the system has a roughness_{RMS} <0.25 nm, then at a roughness_{RMS} of <0.25nm for the glass support, instantaneous bonding of the surfaces will occur. At a glass support roughness of 0.5nm, bonding will take 10 hours at 400°C, 1 hour at 500°C, and as instantaneous from about 600°C. Similarly, at a surface roughness of 1nm, (direct) bonding will take 10 hours at about 500°C and 1 hour at 600°C. At higher temperatures direct bonding will be instantaneous. At a roughness of 1µm direct bonding will take 10 hours at 700°C and 10min at 800°C. At a roughness of 5µm of the glass support the (direct) bonding time will be 50hours at 700°C and 1 hour at 800°C. Obviously, by routine experimentation the desired temperature and time for (direct) bonding can be determined. The particular contact surface roughness can be obtained by using standard techniques such as atomic force microscopy (AFM).

As stated above the systems according to the invention may be micro or nano and is based on silicon, silicon based material, such as silicon oxide, silicon nitride, and silicon carbide. The systems of the invention may have layers of thickness of less than 10µm, or even down to 5nm, depending on the intended application. Such thin layers are generally supported on a porous substrate having sufficiently small pores, such as pores having a pore diameter of 1 to 10µm. Furthermore, the system may be provided with additional layers of materials such as metals and/or polymers thereby forming a laminate structure. Such additional layers may be structured (with micro needles and/or micro/nano patterns). For practical purposes and to provide stable and rigid systems it is preferred that the system with thin layers comprises at least one microsieve having a pore size in the range of 50µm to 5nm, preferably 20µm to 50nm.

The micro and nano systems according to the invention may be processed fully or partially before (fusion) bonding to the glass support. Further processing of the systems after being bonded to the support is also contemplated and possible. Such subsequent processing can be termed as hybrid micromachining which is a combination of micro or nano machining with glass-machining.

For applications in which the system forms an active boundary between two communicating compartments it is preferred that in the step ii) the system is provided at both sides with a glass support or a glass support is provided at both ends with a micro or nano system.

As stated above the supported system according to the invention may be used for a variety of applications. To that extent the system may comprise a silicon based (nano)film, a perforated membrane, a deflectable membrane, at least one micro needle comprising membrane, a membrane electrode assembly, catalyst, and/or a pressure sensor.

For various applications it is important to communicate with the interior enclosed by the system(s) and the glass support(s). Elegantly, communication channels (like electrical leads and fluidum channels) are provided at the interface of the system and the glass support.

Another aspect of the invention relates to a glass supported system that may be obtained with the above described methods according to the invention. Such systems are characterized by a nano and/or micro system which is directly fusion bonded to a glass support and lies within the confinement thereof. Such glass supported systems may take a form for a particular application. Non limiting examples are supported system on a glass tube, in a Swagelok^{®}, in a gas permeation device, in a fluid filtration device, in a safety valve, in a pressure sensor, in a drug delivery or sample extraction device, in a atomization device, in a emulsion device, in a fuel cell, in a reactor, in a flow sensor.

Finally, the invention relates to the use of a glass support suitable for making a micro or nano system according to the invention as described above. Such a glass support may have the form of a tube, having a circular, rectangular or square cross section. The tube may be provided with connections (inlet and/or outlet), with electrical leads, with sensors and the like, all for the subsequent applications.

Mentioned and other features and characteristics of the method and glass supported micro or nano system according to the invention will be illustrated by making reference to the following examples. These examples are given for information purposes only and are not intended to limit the invention. In this reference will be made to the following figures in which:
Figure 1 shows a standard Swagelok^{®} connected to a glass supported system according to the invention in cross-section view;
Figure 2 shows an glass supported system comprising a silica nano membrane on a micro sieve supported by a glass tube as a 2D cross-sectional representation (A) and a SEM photo of the top view of the membrane stack (B);
Figure 3 shows a glass supported system comprising micro machined silicon micro sieve filters assembled on a tubular glass support in 2D cross-sectional representation of a single stage filter (A) and in a modular multi stage filter (B);
Figure 4 shows a glass supported system comprising a micro machined bossed check valve assembled on a glass tube support in 2D cross-sectional representation (A) and a photo of the tube with the silicon based valve (B);
Figure 5 shows in a 2D cross-sectional schematic view an glass supported system in the form of a micromembrane based pressure sensor mounted by direct fusion on a glass tube;
Figure 6 shows an glass supported system comprising a micro needles membrane directly bonded on a glass tube support in a 2D cross-sectional representation (A) and a SEM picture of the micro needles array on the system membrane (B);
Figure 7 shows in cross sectional view a glass supported system in the form of a micro machined nozzle array for fluid jet atomization supported on a glass tube;
Figure 8 shows in cross sectional view a glass supported system comprising a glass tube supported micro-emulsifier chip;
Figure 9 shows a photo of nozzle disc supported on a glass tube (A) and a photo of the micro-thruster assembly within the nozzle disc (B);
Figure 10 shows in a 2D cross-sectional schematic view a glass supported system comprising a membrane fuel cell having a membrane electrode assembly supported at both sides by glass assembly supports;
Figure 11 shows customized glass supports suitable for use in the assemblies shown in figure 10;
Figure 12 shows in a 2D cross-sectional schematic view a glass supported system comprising a micromembrane reactor supported on a glass assembly;
Figure 13 shows in a 2D cross-sectional schematic view an orifice flow meter supported in a glass tube; and
Figure 14 shows a system provided at the interface with a communication channel (A) side view, (B) cross section A-A.

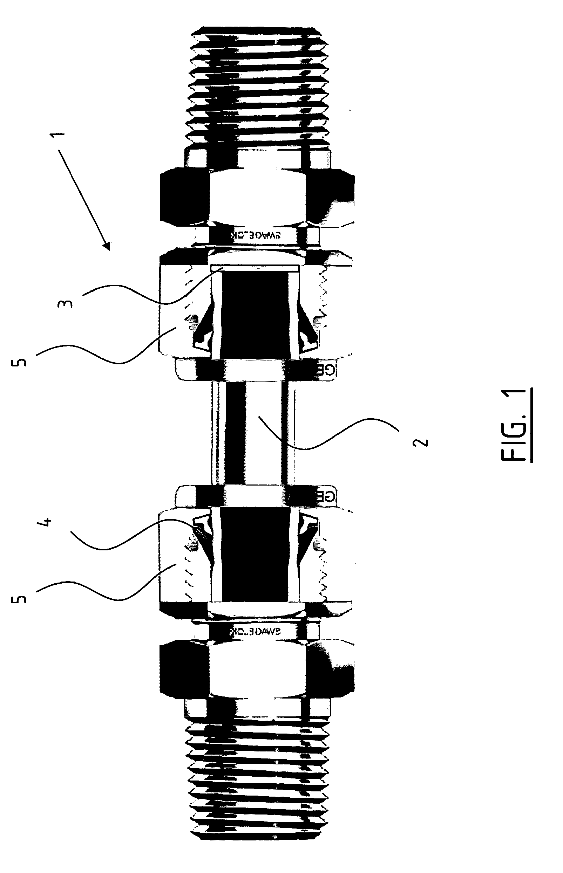

Figure 1 shows a glass tube supported micro system 1 comprising a glass tube 2 made of Pyrex^{®} glass and provided at one end with a micro electromechanical system (MEMS) 3. This MEMS 3 is directly bonded to the glass tube 2 via fusion bonding (temperature 700°C during 10min). The glass tube support 2 has a roughness_{RMS} < 0.10 nm and the MEMS 3 of about 5nm. The glass tube 2 is at both ends connected via a ferrule grip 4 to swageloks^{®} 5. These MEMS-on-tube assemblies 1 can then be used in set-ups with standard Swagelok^{®} connections.

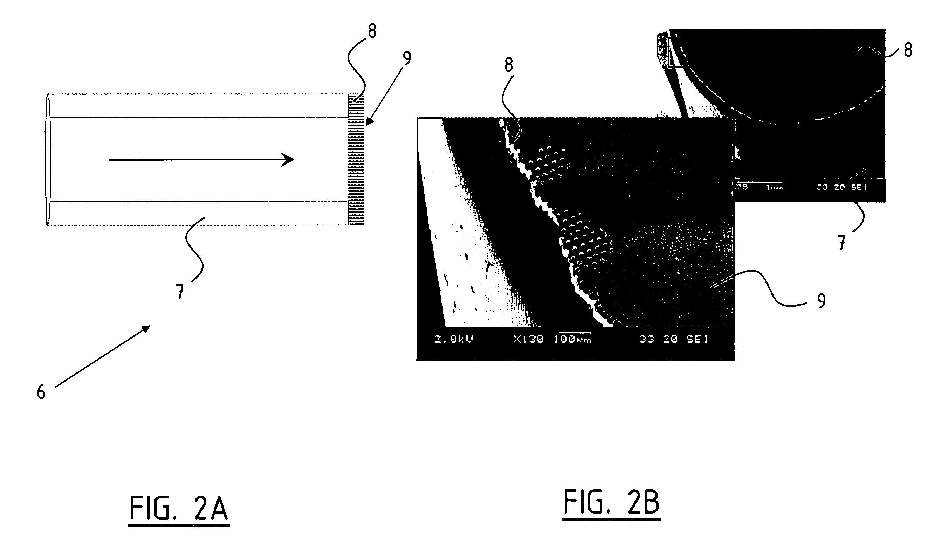

Figure 2 shows a glass tube supported system 6 comprising a glass tube 7 provided with a MEMS having a silicon micro sieve 8 with pores of 10µm supporting a silicon dioxide membrane 9. The micro sieve 8 had a surface roughness of <0.5nm and was directly bonded to the glass tube (roughness 1nm) at 600°C in 1 hour. The system 6 is to be used for selective gas permeation.

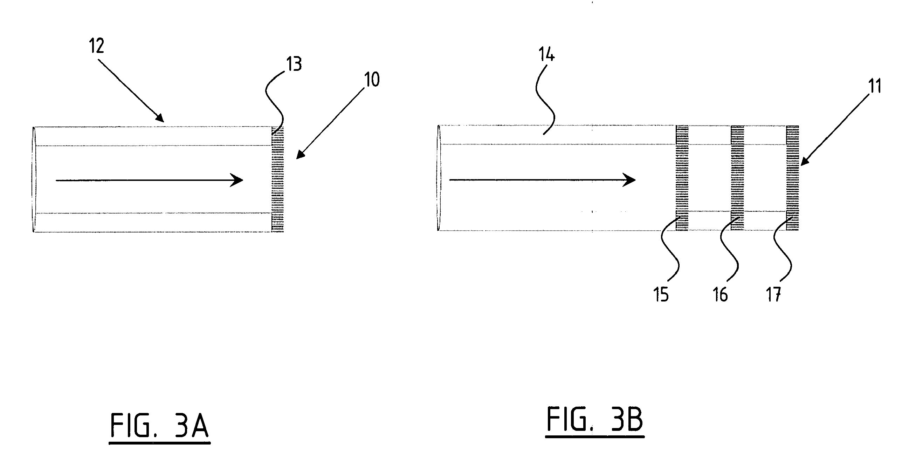

Figure 3 shows as a supported electromechanical system of the invention a micro sieve 10 and a nano sieve 11. The micro sieve 10 comprises a glass tube supporting a silicon micro sieve 13 (pore size 5µm). The multistage nano sieve 11 comprises three successive sieves 15, 16, and 17 (pore sizes 10µm, 1µm and 500nm, respectively). The silicon sieves 15-17 had a surface roughness <0.25nm and were directly bonded to the glass tube (surface roughness 100nm) spontaneously at 800°C. Both sieves 10 and 11 can be used for fluid filtration.

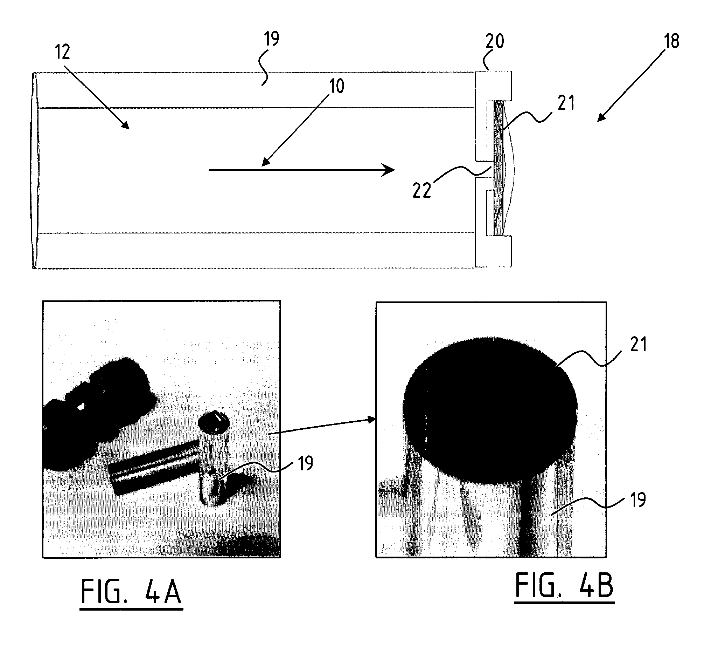

Figure 4(A) shows a supported micro system 18 according to the invention comprising a glass tube 19 (surface roughness 1nm) directly bonded at 500°C in 10 hours to a micro machined silicon bossed valve 20 (surface roughness <0.25nm). The valve is provided with a deflectable membrane connected to the valve and extending over an opening 22 therein. Figure 4(B) shows at various magnifications the glass tube provided with the valve. This system 18 can be used as check or safety valve.

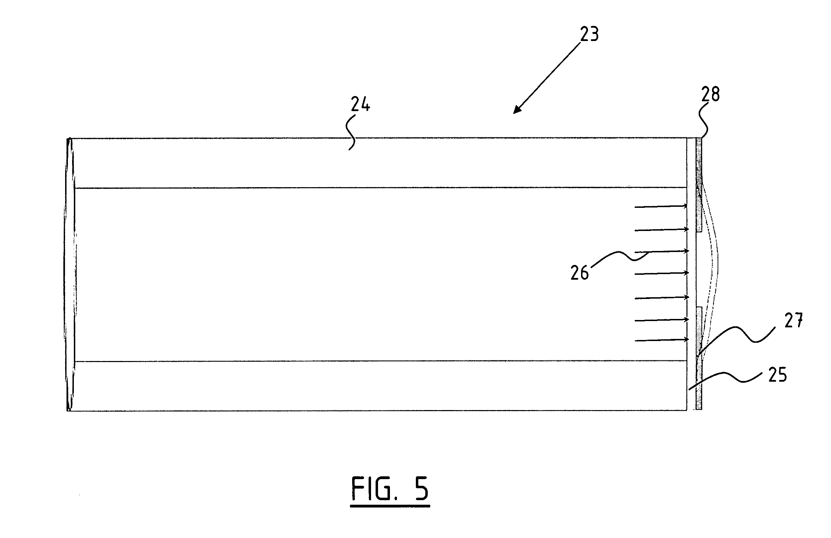

Figure 5 shows a system 23 according to the invention in the form of a pressure sensor 23. The sensor 23 comprises a glass tube 24 (surface roughness 10nm) annealed in 10 hours (temperature 600°C) to a porous silicon micro membrane 25 (surface roughness <0.25nm), deflectable due to fluidum pressure 26. The deflection is measured by a strain gauge 28 mounted on the membrane 25.

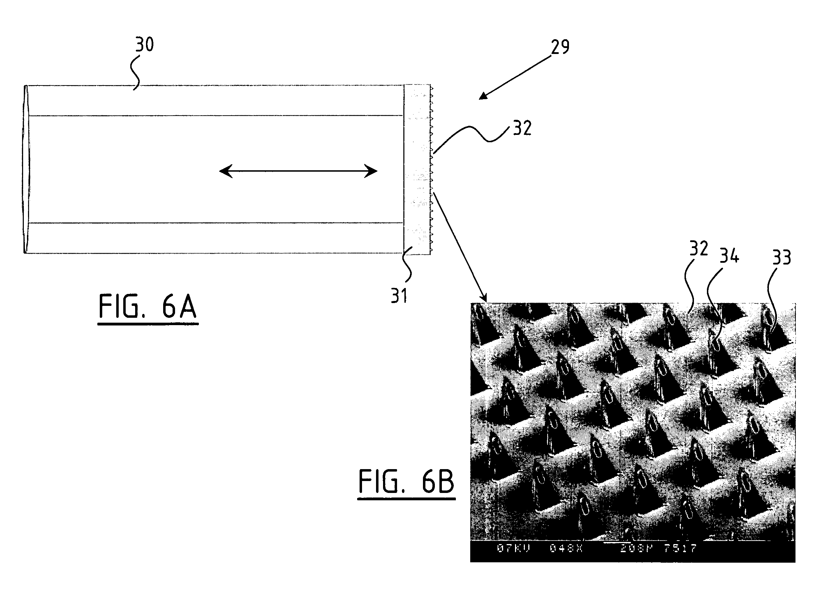

Figure 6(A) shows a supported MEMS 29 according to the invention comprising a glass tube 30 supporting a direct bonded porous silicon membrane 31 (pore size 1µm) at the surface 32 provided with an array of needles 33 having an opening 34 (figure 6(B)). The glass tube 30 supported MEMS can be used for delivering controlled amounts of drugs to patients or to extract samples from a patient.

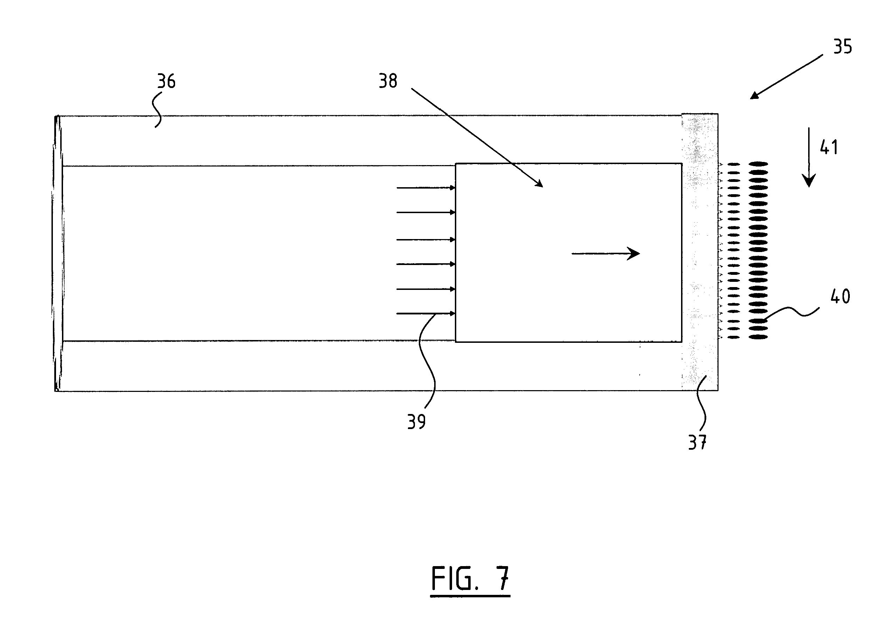

Figure 7 shows a glass tube supported NEMS 35 according to the invention. The system 35 comprises a glass tube 36 carrying a fusion bonded silicon sieve 37 (pore size 500nm). The glass tube 36 is filled with pressurized ink 38 which is by pressure pulses ejected as nano jets 40 into a gas stream 41 for subsequent deposition on a substrate.

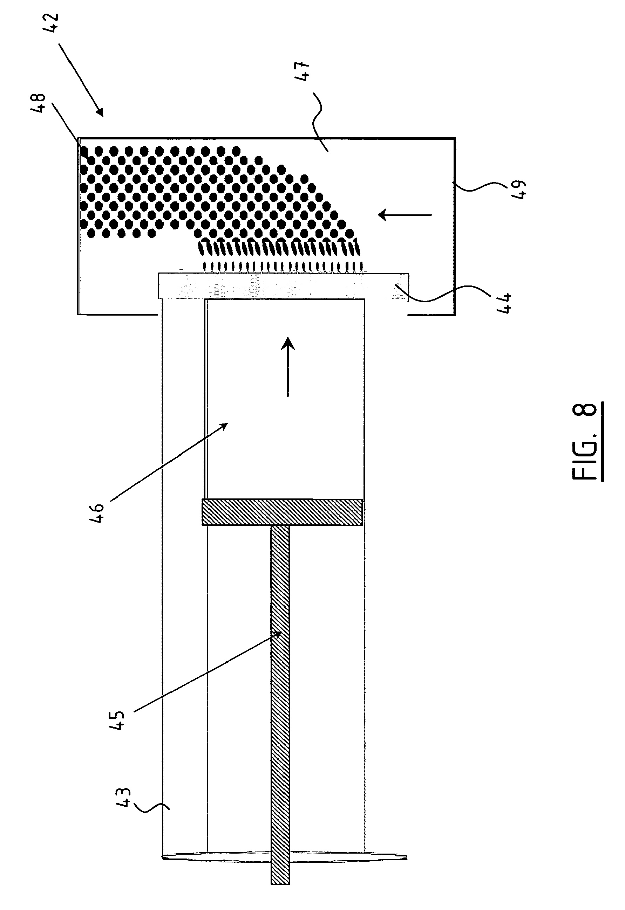

Figure 8 shows a glass tube supported MEMS 42 (or micro emulsifier 42) comprising a glass tube 43 carrying a directly bonded silicon micro sieve 44 (pore size 1µm). In the glass tube is slidably arranged a piston 45 pressing a liquid 46 towards the micro sieve 44. This liquid 46 is passed through the micro sieve 44 and enters in the form of emulsion micro droplets 48 in a continuous liquid 47 flowing through a tube 49 connected to the glass tube 43.

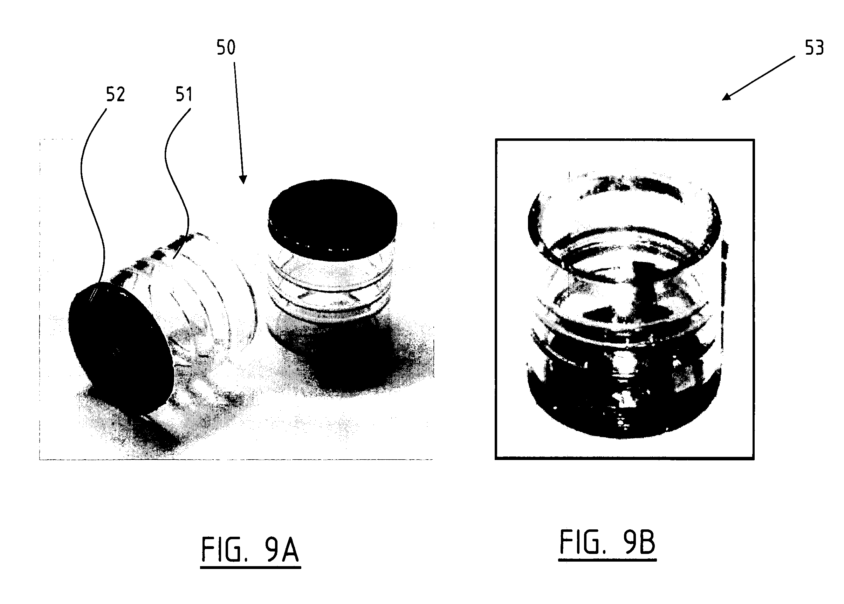

Figure 9(A) shows a micro propulsion system 50 according to the invention comprising a micro nozzle disc 52 (silicon sieve; pore size 100µm) fusion bonded to and supported on a glass tube 51. The system 50 is assembled with micro thrusters components 53 (figure 9B).

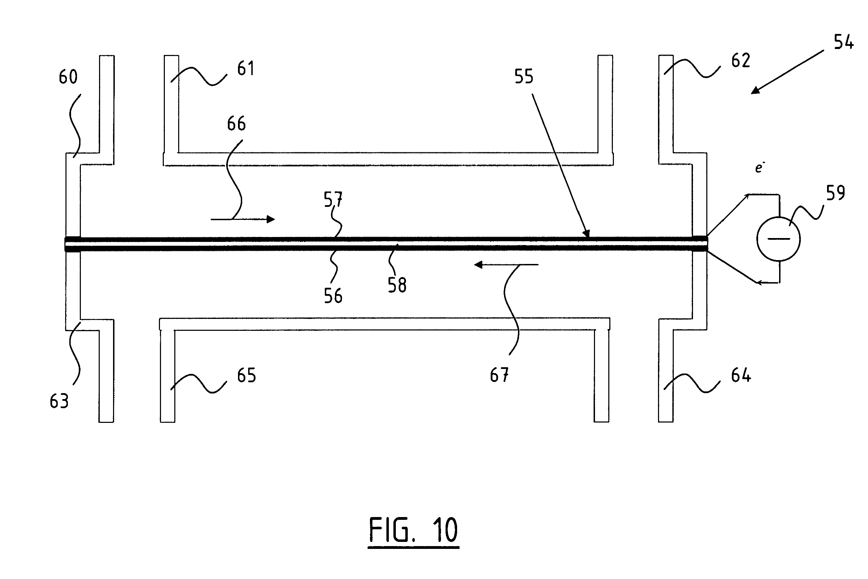

Figure 10 shows a glass support MEMS 54 according to the invention. The system 54 comprises a MEMS 55 comprising a silicon micro sieve 58 filled with electrolyte (pore size 5µm). The sieve is provided at both sides with electrodes 57 and 56 connected to a load 59. The MEMS 55 is at both sides supported by a glass support 60 and 63 having a rectangular binding surface. The glass supports 60 and 63 (roughness 5µm) are directly bonded to the MEMS 55 (roughness <0.25nm) at 800°C during 1 hour. The glass support 60 is provided with an inlet 61 for fuel 66 and an outlet 62 for flue gas. Counter current to the fuel 66 passes oxidant 67 from an inlet 64 to an outlet 65. The system 54 can be used as micro fuel cell.

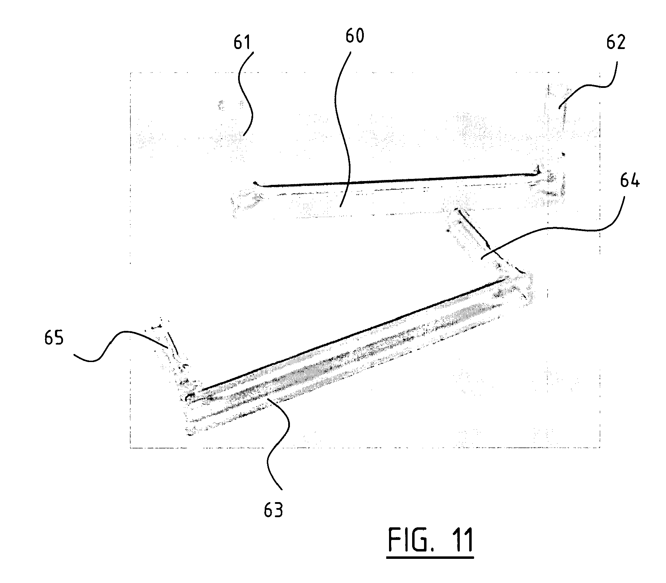

Figure 11 shows customized glass supports 60 and 61 that are used for the supported MEMS shown in figure 10.

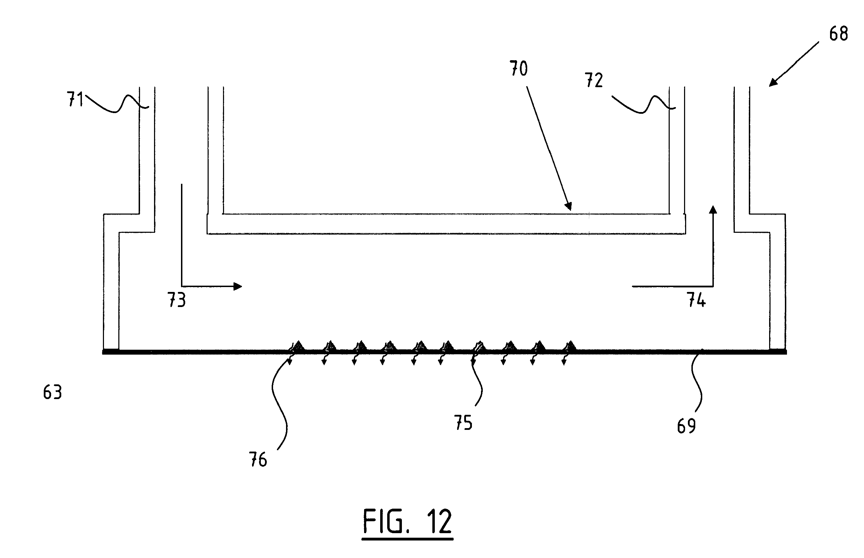

Figure 12 shows a system 68 comprising micro membrane reactor supported and assembled on glass support 70. The glass support 70 comprises inlet 71 for reactant gas and an outlet for a gas stream 72. The glass support 70 carries a micro membrane 69. The micro membrane 69 is provided at the glass support side 70 with catalyst particle 75 adhered or embedded in the membrane 69. Product 76 of the heterogeneous catalytic reaction diffuse through the membrane 69. The glass support 70 functions as a reaction chamber. In the alternative the reaction products do not diffuse through the membrane 69 and are removed via the outlet 72.

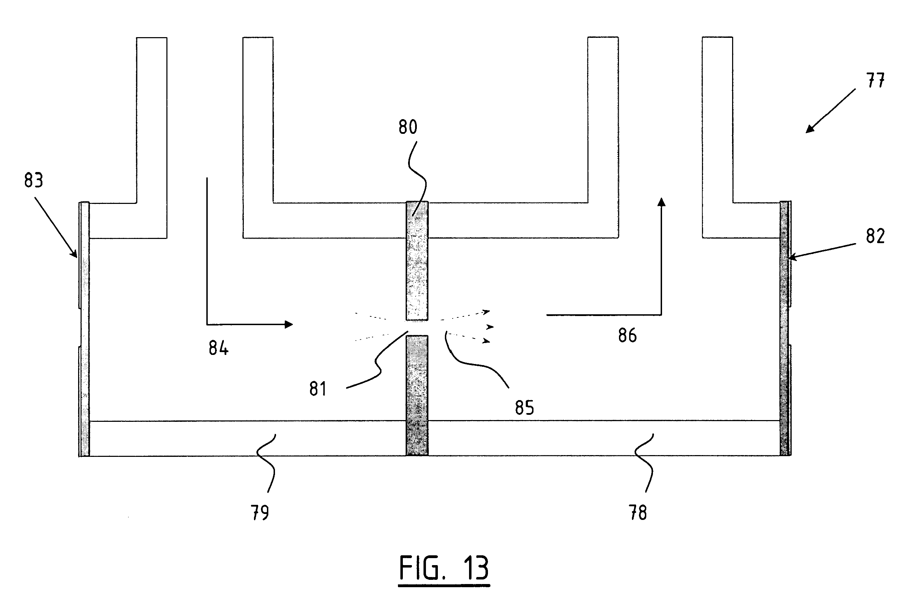

Figure 13 shows a micro flow sensor 77 according to the invention. Two glass tubes 78 and 79 are connected by an inserted silicon plate 80 directly bonded thereto and provided with an opening 81. The glass tube 78 is provided with a pressure sensor 82 and the glass tube 79 is provided with a pressure sensor 83 both having a structure and function as discussed in relation with figure 5. A fluid flow 84 passes through the glass tube 84 and enters via the opening 81 as gas flow 85 the glass tube 78. This gas flow leaves the glass tube 78 as gas flow 86. Both pressure sensors 82 and 83 measure the pressure of the respective gas flows 84 and 86. Using the measure pressure difference the actual gas flow can be determined.

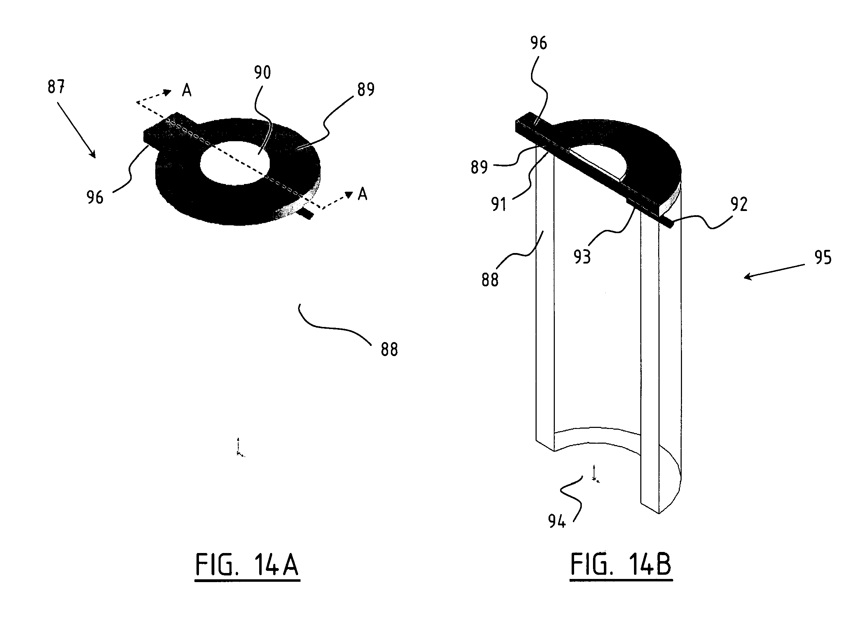

Figure 14(A) shows in side view a system 87, comprising a glass tube 88 provided at one end with a micro sieve 89 provided with a silicon dioxide film 90. The micro sieve comprises an extension 96 extending beyond the confinement of the glass tube 88. At the interface 91 between the glass tube 88 and the silicon micro sieve 89 is provided a communication channel 92 which is formed at the interface 91 in a corresponding indentation 93 in the glass tube 88. This communication channel 92 may comprise an electrical lead or has the form of a fluidum channel. Accordingly, the communication port 92 allows communication between the interior 94 of the glass tube 88 and the outside 95.

## Claims

1. Method for making a glass supported micro or nano system, comprising the steps of:
i) providing a glass support;
ii) mounting at least one system on at least one glass support; and
iii) bonding the system to the glass support.

2. Method according to claim 1, wherein the system is supported within or extends beyond the confinement of the glass support.

3. Method as claimed in claim 1 or 2, wherein in step ii) systems are mounted at both sides on the glass support, or glass supports are mounted at both sides of the system.

4. Method according to claim 1-3, wherein the bonding comprises a heat treatment.

5. Method according to claim 4, wherein the heat treatment is carried out at a temperature in the range of 200°C to 1200C°, preferably 300°C to 900°C, more preferably 400°C to 800°C.

6. Method as claimed in claim 4 or 5, wherein the heat treatment is carried out during a heat treatment time period in the range of 1min to 100hours, preferably 5min and 50hours, more preferably 10min and 10hours.

7. Method according to claim 5 or 6, wherein the applied temperature and/or the heat treatment time is dependent on the surface roughness of the glass support and of the system.

8. Method according to claim 7, wherein the surface roughness of the system is less than 10nm, preferably less than 1nm, more preferably less than 0.25nm.

9. Method according to claim 7 or 8, wherein the surface roughness of the glass support is less than 5µm, preferably less than 100nm, more preferably less than 1nm.

10. Method as claimed in claim 1-9, wherein the glass support is made of Pyrex^{®}, Duran^{®}, or ceramic.

11. Method as claimed in claim 1-10, wherein system is based on silicon, silicon based material, such as silicon oxide, silicon nitride, and silicon carbide.

12. Method as claimed in claim 1-11, wherein the system comprises at least one microsieve having a pore size in the range of 50µm to 5nm, preferably 20µm to 50nm.

13. Method as claimed in claim 1-12, wherein the system comprises a silicon based (nano)film, a deflectable membrane, at least one micro needle comprising membrane, a membrane electrode assembly, catalyst, a pressure sensor.

14. Method as claimed in claim 1-13, comprising the step of providing at least one communication channel at the interface of the system and the glass support.

15. A glass supported micro or nano system obtainable by the method of claim 1-14.

16. The glass supported micro or nano system according to claim 15, mounted on a glass tube, in a Swagelok^{®}, in a gas permeation device, in a fluid filtration device, in a safety valve, in a pressure sensor, in a drug delivery or sample extraction device, in a atomization device, in a emulsion device, in a fuel cell, in a reactor, in a flow sensor.

17. Use of a glass support defined in claim 1-14 for making a glass supported system according to claim 15.
